# EUROPÄISCHE PATENTANMELDUNG

(11) **EP 3 021 086 A1**
(43) Veröffentlichungstag der Anmeldung: **18.05.2016**
(21) Anmeldenummer: 15182856.3
(22) Anmeldetag: 28.08.2015
(51) Int. Cl.: G01D 4/00, G01D 18/00, G06K 9/32

(54) **VERFAHREN UND VORRICHTUNG ZUR KALIBRIERUNG EINES OPTISCHEN SENSORS AN EINEM MECHANISCHEN VERBRAUCHSMENGENZÄHLER**

(30) Priorität: 13.11.2014 DE 102014016715
(71) Anmelder: RWE Effizienz GmbH, 44139 Dortmund (DE)
(72) Erfinder: Kemmann, Harald, 42555 Velbert (DE); Becker, Marc Oliver, 42853 Remscheid (DE)
(74) Vertreter: Cohausz & Florack

(57) **Zusammenfassung**

Verfahren und Vorrichtung zur Kalibrierung eines an einem mechanischen Zählwerk 2 angeordneten optischen Sensors. Eine sichere Erkennung eines Zählerstandes ist durch optisches Erfassen eines Bildes zumindest eines Sichtbereichs 10a des eine Mehrzahl von Zählscheiben 6a-e umfassenden Zählwerks 2, Bestimmen von Bildobjekten 14 innerhalb des erfassten Bildes, und Ermitteln einer Auswahl von Auswertungsobjekten aus den Bildobjekten 14 derart, dass die ermittelten Auswertungsobjekte jeweils genau einer Zählscheibe 6a-e zugeordnet sind, erreicht.

## Beschreibung

Der Gegenstand betrifft ein Verfahren als auch eine Vorrichtung zur Kalibrierung eines an einem mechanischen Zählwerk angeordneten optischen Sensors.

Mechanische Verbrauchsmengenzähler (Zähler), insbesondere Energieverbrauchszähler sind hinlänglich bekannt. Im Stand der Technik sind solche Zähler für beispielsweise Strom, Gas und Wasser seit langem bekannt. Allen Zählern gemeinsam ist ein mechanisches Zählwerk. In diesem mechanischen Zählwerk werden Nummernscheiben (auch Zählscheiben, Zählräder, Nummernräder oder dergleichen genannt) über mechanische Zählimpulse angetrieben. Die Nummernscheiben sind entlang einer gemeinsamen Achse nebeneinander angeordnet. Ein Sichtfenster zeigt den aktuellen Zählerstand (auch Zählwert genannt) derart an, dass die entlang des Sichtfensters horizontal entlang in etwa einer Gerade angeordneten, auf den Nummernscheiben angeordneten Ziffern einen aktuellen Zählwert repräsentieren.

Solche mechanischen Zähler müssen manuell ausgelesen werden. Das heißt, dass ein Mitarbeiter des Messstellenbetreibers oder des Energieversorgers regelmäßig, üblicherweise jährlich, den Zählerstand ablesen muss. Dies kann auch nur stichprobenartig erfolgen. Zählerstände können auch von Kunden selbst ausgelesen und mitgeteilt werden, doch ist eine Kontrolle stets notwendig. Dies führt zu erheblichen Verwaltungsaufwand.

Außerdem wird beispielsweise im Gas und/oder Strommarkt die Möglichkeit gefordert, laufend den Energieverbrauch erfassen zu können. Zum einen soll dies dem Verbraucher Transparenz über seinen eigenen Energieverbrauch geben. Der Verbraucher soll stets den aktuellen Zählerstand auslesen können. Außerdem sollen beispielsweise zeitabhängige Tarife eingeführt werden, die ein zeitabhängiges Ablesen/Erfassen eines Zählerstands notwendig machen.

Neben den Genannten bestehen eine Vielzahl anderer Bedürfnisse, bestehende mechanische Zähler durch elektronische, intelligente Zähler auszutauschen. Bei mehr als 45 Millionen installierten mechanischen Elektrizitätszählern allein in der Bundesrepublik Deutschland ist ein solcher Austausch jedoch finanziell als auch von der notwendigen Installationszeit kaum darstellbar. Es müssen andere Möglichkeiten geschaffen werden, Energiemengenzähler elektronisch auslesen zu können.

Aus der deutschen Offenlegungsschrift DE 10 2010 053 019 A1 ist die Möglichkeit beschrieben, einen optischen Sensor an einem mechanischen Zähler anzuordnen. Hierzu wird der optische Sensor mittels einer Justiereinrichtung elektronisch an dem Zählwerk, insbesondere den Zählscheiben, ausgerichtet und anschließend auf der Scheibe des mechanischen Zählers verklebt. Nachteilig bei diesem Verfahren ist die aufwendige Elektronik, die zur Justierung des optischen Sensors an dem Zähler notwendig ist. Außerdem ist es nachteilig, dass die Erfassung der Ziffern des Zählers unter bestimmten Umweltbedingungen ungenau ist. Außerdem ist der optische Aufbau des Gehäuses komplex.

Dem Gegenstand lag somit die Aufgabe zugrunde, das optische Auslesen eines mechanischen Zählers zu optimieren.

Diese Aufgabe wird durch ein Verfahren nach Anspruch 1 und eine Vorrichtung nach Anspruch 17 gelöst.

Zunächst ist erkannt worden, dass selbst der Austausch bestehender Zähler durch Zähler mit optischem Ausgang in einem realistischen Zeitrahmen nicht möglich ist. Darüber hinaus sind die Kosten für mechanische Zähler mit optischem Ausgang erheblich, sodass nicht davon ausgegangen werden kann, dass in naher Zukunft große Teile der installierten mechanischen Zähler über optische Ausgänge verfügen. Zum anderen wäre es bei einem ohnehin durchzuführenden Austausch bestehender mechanischer Zähler durch solche mit optischem Ausgang durchaus möglich, diese Zähler direkt mit Kommunikationsschnittstellen zu versehen, um diese über Weitverkehrsnetze fernauslesbar zu machen.

Darüber hinaus ist auch erkannt worden, dass eine durch einen mechanischen Laien installierte Vorrichtung zum optischen Erfassen eines Zählwerts eines mechanischen Zählwerks zuverlässig den Zählwert auslesen können muss. Dies ist insbesondere vor dem Hintergrund von sich stark verändernden Umgebungsbedingungen eine zwingende Voraussetzung, insbesondere auch um zeitabhängige Tarife einführen zu können. Auch sind die installierten mechanischen Zähler mit unterschiedlichsten Zählwerken ausgestattet, sodass ein optisches Erkennen der Ziffern auf den Zählwerken und insbesondere den Nummernscheiben bei unterschiedlichsten Zählwerken sichergestellt sein muss. Dies erfordert ein sicheres Erkennen der Ziffern auf den Zählwerken.

Der gegenständliche optische Sensor ist vorzugsweise eine Kamera, beispielsweise eine digitale Kamera, insbesondere eine CCD Kamera. Der Sensor erfasst Bilder des mechanischen Zählers, insbesondere der Zählscheiben des mechanischen Zählers. Hierbei ist die Kamera vorzugsweise so auf den mechanischen Zähler ausgerichtet, dass diese einen Sichtbereich des eine Mehrzahl von Zählscheiben umfassenden Zählwerks erfasst. Innerhalb des Bildes sind vorzugsweise alle Zählscheiben bzw. der Ablesebereich aller Zählscheiben des mechanischen Zählwerks erkennbar. Es ist jedoch erkannt worden, dass der Sensor nicht ausschließlich auf die Zählscheiben des Zählwerks ausgerichtet werden kann, sondern dass das von dem Sensor erfasste Bild auch die an die Zählscheiben angrenzenden Bereiche erfasst. Es ist nun die Aufgabe, die Zählerstände zu erfassen, in dem die in dem Bild erfassten Bildinformationen so verarbeitet werden, dass tatsächlich die Ziffern auf den Zählscheiben erfasst werden und nicht etwa Bildinformationen aus den Zählscheiben angrenzenden Bereichen. Durch eine geeignete Kalibrierung soll gewährleistet werden, dass stets korrekte Zählerstände durch den optischen Sensor bzw. den nachgeordneten Prozessor ausgegeben werden können. Der optische Sensor erfasst in Zeitabständen, beispielweise im Sekundentakt, im Minutentakt, im Zweiminutentakt, im Fünfminutentakt oder dergleichen, jeweils ein Bild des Sichtbereichs. Durch eine geeignete Kalibrierung wird sichergestellt, dass auch bei verschiedensten mechanischen Zählwerktypen stets eine korrekte Bild-Zahlen-Transformation ermöglicht ist. Hierzu wird in dem Bild der Bereich detektiert, in dem die Zählescheiben ihren Ablesebereich haben.

Jedes erfasste Bild enthält neben dem Zählerstand bzw. dem Ablesebereich der Zählscheiben auch weitere Bildelemente. Es ist die Aufgabe des gegenständlichen Verfahrens, alle erkannten Bildelemente zu bewerten und anschließend nur die Bildelemente bzw. Ausschnitte im Bild zu finden, die für die nachfolgende Bild-Zahlen-Transformation zu verwenden sind. Diese Elemente sind vorzugsweise die Bereiche der Ziffern auf den Zählscheiben des Zählwerks, insbesondere die Ablesebereiche der jeweiligen Zählscheiben. Es sei angemerkt, dass die Ablesebereiche für jede Zählscheibe durch eine gesonderte Öffnung in einer Blende gebildet sein können oder auch dass eine durchgehende Öffnung in einer Blende den Blick auf alle Zählscheiben frei gibt, wobei jeweils nur ein Winkelabschnitt einer jeweiligen Zähscheibe sichtbar ist. Dieser Winkelabschnitt ist dabei ausreichend, eine Ziffer der Zählscheibe vollständig darzustellen.

Mit Hilfe geeigneter Bilderkennungsverfahren werden in dem erfassten Bild zunächst Bildobjekte bestimmt. Insbesondere zeichnen sich Bildobjekte durch umlaufende Kanten ab. In der Fachwelt sind verschiedenste Verfahren bekannt, Bildobjekte zu erfassen. Hierzu zählt unter anderem eine Kantenerkennung, insbesondere mit Hilfe des Differenzoperators ersten und/oder zweiten Grades. Auch ist beispielsweise ein Template Matching möglich, um Objekte innerhalb eines Bildes zu erfassen.

Nachdem Bildobjekte innerhalb des erfassten Bildes bestimmt wurden, müssen diejenigen Bildobjekte ermittelt werden, die zur Erfassung des Zählerstandes verwendet werden. Auf diesen Bildobjekten sind vorzugsweise jeweils eine Zählscheibe bzw. ein eine Ziffer aufweisender Winkelabschnitt einer Zählscheibe zu erkennen. Aus den Bildobjekten werden Auswertungsobjekte ermittelt, derart, dass die ermittelten Auswertungsobjekte jeweils genau einer Zählscheibe zugeordnet sind. Insbesondere sind die Auswertungsobjekte derart angeordnet, dass sie unmittelbar im Bereich jeweils einer Ziffer der Zählscheibe angeordnet sind. Die Zählscheibe ist in dem Zählwerk vorzugsweise derart angeordnet, dass ein Winkelabschnitt in einem Sichtfenster bzw. Ablesebereich freigegeben ist. Innerhalb dieses Sichtfensters kann die jeweilige aktuelle Ziffer der Zählscheibe ablesbar sein. Vorzugsweise ist ein Auswertungsobjekt so angeordnet, dass es mit einem Sichtfenster zusammenfällt.

Vorzugsweise ist das Sichtfenster ein sogenannter Ablesebereich. Das Auswertungsobjekt wird so bestimmt, dass dieses jeweils einem solchen Ablesebereich zugeordnet ist. Vorzugsweise werden die ermittelten Auswertungsobjekte alle jeweils einem Ablesebereich jeweils einer Zählscheibe zugeordnet. Somit ist vorzugsweise für jede Zählscheibe genau ein Auswertungsobjekt bestimmt worden.

Gemäß einem Ausführungsbeispiel wird vorgeschlagen, dass Farbwerte von Bildpunkten des erfassten Bildes in Grauwerte oder Schwarz-Weiß Werte überführt werden. Insbesondere die Überführung in Schwarz-Weiß Werte führt zu einer Binarisierung des Bildes. Eine solche Binarisierung ermöglicht eine gute Objekterkennung, insbesondere mit Hilfe von Kantenerkennung. Durch Festlegen eines Grenzwertes des Farb- oder Helligkeitswertes kann bestimmt werden, ob ein Bildpunkt schwarz oder weiß abgebildet wird. Durch Variation dieses Grenzwertes kann eine Kantenerkennung mit unterschiedlicher Detailtiefe durchgeführt werden.

Insbesondere ist es auch vorteilhaft, das erfasste Bild zunächst zu transformieren. Hierbei ist insbesondere eine Transformation in ein Ortsfrequenzspektrum eine sinnvolle Transformation. Eine solche Transformation kann vorzugsweise mit Hilfe einer Laplace-Transformation durchgeführt werden.

Mit Hilfe des transformierten Bildes können die Bildobjekte bestimmt werden. Insbesondere im Ortsfrequenzspektrum lassen sich Kanten besonders einfach erkennen, in dem ein Grenzwert der Ortsfrequenz festgelegt wird, oberhalb dessen eine Kante angenommen wird.

Es wird vorgeschlagen, dass die Bildobjekte, insbesondere im transformierten Bild, mit Hilfe einer Kantenerkennung bestimmt werden. In einem binarisierten Bild kann eine Kantenerkennung auch erfolgen, ohne dass das Bild transformiert wird.

Nachdem in dem Bild Bildobjekte bestimmt wurden, müssen aus den bestimmten Bildobjekten diejenigen Bildobjekte selektiert und ermittelt werden, welche für ein Auswertungsobjekt in Frage kommen. Hierbei kann insbesondere nach einem Ausführungsbeispiel eine Filterung nach Größe der Bildobjekte durchgeführt werden. Insbesondere kann die Fläche der Bildobjekte, insbesondere die Anzahl der Bildpunkte pro Bildobjekt ausgewertet werden. Bildobjekte mit einer zu großen Größe als auch Bildobjekte mit einer zu kleinen Größe können ausgefiltert werden. Hierbei kann beispielsweise im Sinne eines Bandpasses ein oberer und ein unterer Grenzwert festgesetzt werden, innerhalb dieser Grenzwerte muss eine Größe eines Bildobjekts sein, um nicht ausgefiltert zu werden. Die Grenzwerte können insbesondere so bestimmt sein, dass die sich daraus ergebende Größe eines Bildobjektes in etwa der Größe eines Ablesebereichs einer Zählscheibe entspricht. Die Zählscheiben sind in der Regel genormt und die Größen der Ziffern auf den Zählscheiben ebenfalls. Insbesondere ist eine Mindestgröße als auch eine maximale Größe von Ziffern auf Zählscheiben bestimmt. Abhängig hiervon können obere und untere Grenzwerte für die Größe der Bildobjekte festgelegt werden. Nur diejenigen Bildobjekte, die innerhalb dieser festgesetzten Grenzen liegen, können später überhaupt als Auswertungsobjekte in Betracht gezogen werden.

Gemäß einem Ausführungsbeispiel ist es möglich, Bildobjekte zu gruppieren. Anschließend kann eine Gruppe ausgewählt werden, innerhalb der die Auswertungsobjekte vorhanden sind. Zum Gruppieren der Bildobjekte ist beispielsweise der Abstand der Bildobjekte zueinander ein relevanter Parameter. Insbesondere ist es möglich, solche Bildobjekte zu gruppieren, die in ähnlichen, vorzugsweise gleichen Abständen zueinander angeordnet sind. Zunächst werden Abstände von Bildobjekten zueinander bestimmt. Hierbei können insbesondere horizontale und/oder vertikal verlaufende Abstände zwischen den Bildobjekten innerhalb des Bildes bestimmt werden. Horizontal und vertikal bezieht sich vorliegend vorzugsweise auf die Bildachsen, wobei horizontal beispielsweise parallel zur langen Kante des Bildes und vertikal parallel zur kurzen Kante des Bildes bedeuten kann. Es kann festgestellt werden, wie viele Pixel die Bildobjekte voneinander beabstandet sind und solche Bildobjekte einer Gruppe zugeordnet werden, welche in ähnlichen oder gleichen Abständen zueinander angeordnet sind. Insbesondere kann ein Toleranzbereich festgelegt werden, der festlegt, wann ein Abstand ähnlich ist. Hierzu können beispielsweise eine Anzahl von Bildpunkten, beispielsweise zehn, zwanzig, dreißig Bildpunkte bestimmt werden, um die zwei Abstände zwischen jeweils zwei Bildobjekten unterschiedlich sein können, um diese Abstände dennoch als ähnlich qualifizieren zu können.

Zusätzlich oder alternativ können nach einem Ausführungsbeispiele Bildobjekte derart zueinander gruppiert werden, dass durch Kanten und/oder Ecken von Bildobjekten verlaufende Geraden bestimmt werden. Es können innerhalb des Bildes Geraden gefunden werden, welche durch Kanten und/oder Ecken von zumindest zwei Bildobjekten verlaufen. Solche entlang einer so bestimmten Geraden verlaufende Bildobjekte können zu einer Gruppe gruppiert werden. Auch aus solchen Gruppen können anschließend Auswertungsobjekte ermittelt werden.

Um festzustellen, ob die Gruppe derjenigen Bildobjekte, die entlang einer Geraden aufgefunden wurden, um weitere ergänzt werden können werden ausgehend von den beiden äußeren Bildobjekten der Gruppe weitere Bildobjekte gesucht. Dabei kann die durch die Bildobjekte verlaufende Gerade extrapoliert werden. Entlang der extrapolierten Geraden können weitere Bildobjekte gesucht werden. Finden sich entlang der extrapolierten Gerade weitere Bildobjekte, können diese der Gruppe zugeordnet werden.

Sind entlang einer Geraden Bildobjekte bestimmt worden, können gemäß einem Ausführungsbeispiel deren Abstände untereinander ausgewertet werden. Dabei kann festgestellt werden, dass zumindest zwei Bildobjekte einen bestimmten Abstand zueinander haben. Vorzugsweise weisen jeweils zwei Bildobjekte den gleichen Abstand zueinander auf. Unter Zugrundlegen dieses bestimmten Abstandes können zwischen Bildobjekten weitere Bildobjekte bestimmt werden, derart, dass die Bildobjekte einer Gruppe äquidistant zueinander gesucht werden. So kann es sein, dass zwischen zwei Bildobjekten eine "Lücke" gebildet ist. Eine Lücke kann ein Abstand zwischen zwei benachbarten Bildobjekten sein, der größer ist, als ein zuvor bestimmter geringerer Abstand zwischen zwei anderen Bildobjekten dieser Gruppe. Eine Lücke kann durch ein Bildobjekt aufgefüllt werden, in dem das neue Bildobjekt zwischen den die Lücke einfassenden Bildobjekten eingesetzt wird, so dass der Abstand zwischen dem eingesetzten Bildobjekt und den die Lücke eingrenzenden Bildobjekten in etwa dem Abstand entspricht, mit dem zwei andere Bildobjekte entlang der Geraden voneinander beabstandet sind.

Es kann vorkommen, dass bei der Objekterkennung die Objekte nicht stets gleich ausgerichtet sind, d.h. dass die Objekte gegenüber einer Geraden und/oder einer Bildachse, z.B. einer Horizontalen oder einer Vertikalen, gegebenenfalls verdreht sind. Um ein solches Verdrehen auszugleichen, wird gemäß einem Ausführungsbeispiel vorgeschlagen, dass die Objekte gedreht werden, derart, dass Kanten der Bildobjekte im erfassten Bild vorzugsweise parallel zu einer Bildachse verlaufen.

Nachdem Bildobjekte zu einer Gruppe zusammengefasst wurden, kann innerhalb der Bildobjekte einer jeweiligen Gruppe eine Auswertung derart erfolgen, dass eine Ziffernerkennung, insbesondere eine Zahlenerkennung durchgeführt wird.

Um festzulegen, welche Gruppe von Bildobjekten als Gruppe mit Auswahlobjekten bestimmt werden kann, kann es vorteilhaft sein, die Anzahl der erkannten Ziffern in Bildobjekten einer jeweiligen Gruppe auszuwerten. Je mehr Bildobjekte innerhalb einer jeweiligen Gruppe eine erkannte Ziffer aufweisen, desto wahrscheinlicher ist es, dass diese Gruppe von Bildobjekten entlang des Ablesebereiches der Zählscheiben verläuft. Aus diesem Grunde wird vorgeschlagen, dass die Anzahl von erkannten Ziffern in Bildobjekten einer jeweiligen Gruppe ausgewertet wird. Vorzugsweise wird diejenige Gruppe ausgewählt, in der die Anzahl der erkannten Ziffern am höchsten ist. Die Bildobjekte dieser ausgewählten Gruppe werden als Auswahlobjekte bestimmt.

Nachdem Bildobjekten einer Gruppe zu Auswahlobjekten bestimmt wurde, können gemäß einem Ausführungsbeispiel alle anderen Gruppen bzw. Bildobjekte verworfen werden.

Anschließend kann die Position und die Größe der Bildobjekte, die als Auswahlobjekte bestimmt wurden, für eine spätere optische Erfassung des Zählwerts gespeichert werden. Anschließend kann die Erfassung des Zählwerts derart erfolgen, dass jeweils in den Auswertungsobjekten eine Ziffernerkennung durchgeführt wird.

Es kann vorkommen, dass sich die Position des optischen Sensors relativ zum Ablesebereich während der Betriebsdauer des optischen Sensors verändert, beispielweise durch Temperaturschwankungen oder durch mechanische Ermüdung der Befestigungsmittel. In diesem Fall verschiebt sich das Bild des optischen Sensors. Eine neue Kalibrierung wird notwendig. Aus diesem Grunde wird vorgeschlagen, dass die Kalibrierung in Abständen, vorzugsweise zyklisch, vorzugsweise in Monatsabständen, Halbjahresabständen oder Jahresabständen erneut durchgeführt wird.

Nachfolgend wird der Gegenstand anhand einer Ausführungsbeispiele zeigenden Zeichnung näher erläutert. In der Zeichnung zeigen:
- Fig. 1a: ein mechanisches Zählwerk eines Energiemengenzählers;
- Fig. 1b: eine Seitenansicht einer Zählscheibe eines solchen Zählwerks;
- Fig. 2a: einen Energiemengenzähler gemäß einem Ausführungsbeispiel;
- Fig. 2b: einen weiteren Energiemengenzähler gemäß einem Ausführungsbeispiel;
- Fig. 3: ein erfasstes Bild eines Zählwerks;
- Fig. 4a: ein Beispiel von erkannten Bildobjekten innerhalb des Bildes;
- Fig. 4b: ein weiteres Beispiel von erkannten Bildobjekten innerhalb des Bildes;
- Fig. 5: ein Beispiel einer Gruppe von Bildobjekten die entlang einer Geraden angeordnet sind;
- Fig. 6: ein Beispiel von einer Gruppe von äquidistanten Bildobjekten sowie einer Extrapolation von Bildobjekten;
- Fig. 7: ein Beispiel von erkannten Ziffern innerhalb zwei ermittelten Gruppen.

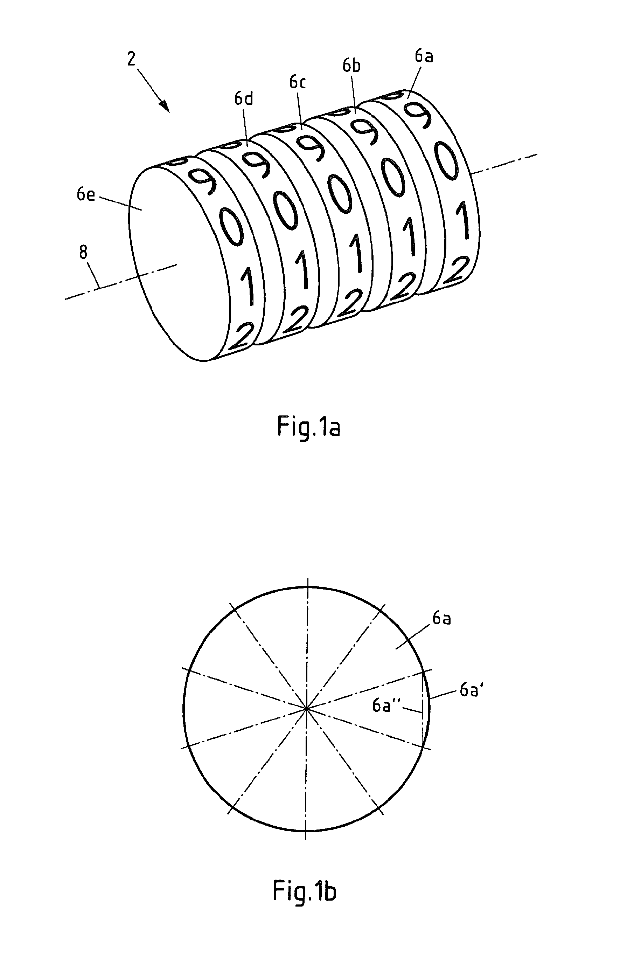

Verbrauchsmengenzähler, wie beispielsweise Stromzähler, Gaszähler, Wasserzähler oder dergleichen werden in herkömmlicher Weise mit einem mechanischen Zählwerk, wie es beispielhaft in Figur 1a dargestellt ist, betrieben. Das mechanische Zählwerk 2 wird über einen nicht dargestellten, mechanischen Antrieb angetrieben. Der mechanische Antrieb übermittelt Zählimpulse von einem mechanischen oder elektromechanischen Sensor. Der Sensor erfasst beispielsweise eine Stromstärke, einen Volumenstrom oder dergleichen und gibt abhängig von den erfassten Werten mechanische Zählimpulse an das Zählwerk 2. Die Zählimpulse treiben die in dem Zählwerk 2 eingebauten Zählscheiben 6a-e mechanisch derart an, dass jede vollständige Umdrehung einer ersten Zählscheibe 6a zu einer 1/10 Drehung einer nachgelagerten Zählscheibe 6b führt. Hierdurch wird ein dezimales Zählsystem über die Zählscheiben 6a-e realisiert. Die Zählscheiben 6a-e rotieren um eine gemeinsame Drehachse 8.

Figur 1b zeigt eine Seitenansicht der Zählscheibe 6a. Die Zählscheibe 6a ist in zehn gleich große Winkelabschnitte 6a' unterteilt. In jedem der Winkelabschnitte 6a' ist eine Ziffer 0-9 aufgetragen. Der Bereich, in dem die Ziffer aufgetragen sein kann, ergibt sich aus der Länge der Sekante 6a" über den Kreisbogen 6a'. Bei einer vollständigen Umdrehung zeigt die Zählscheibe 6a jede Ziffer 0-9 genau einmal an.

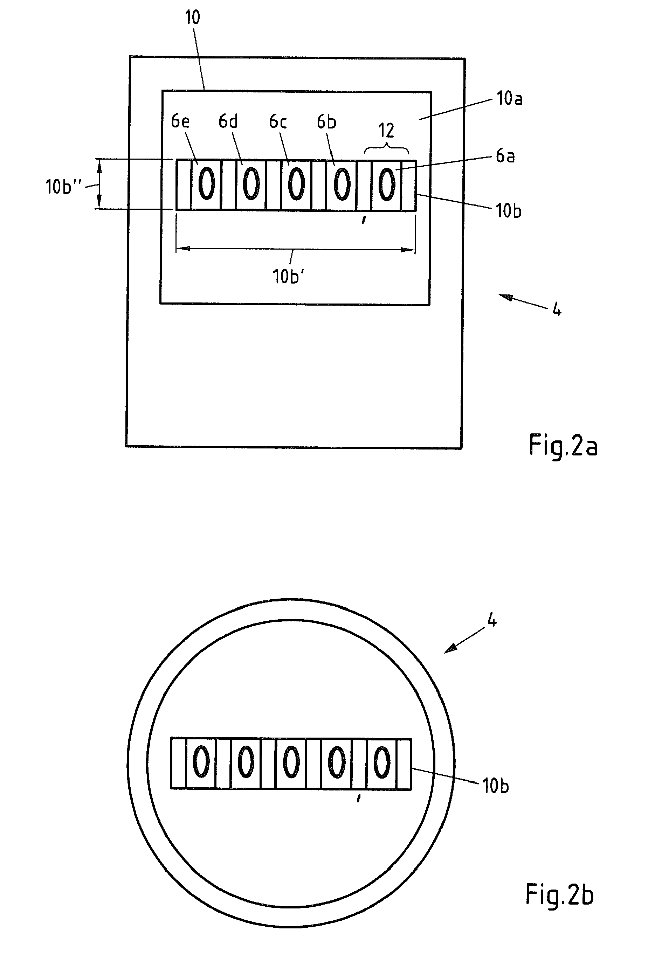

Das Zählwerk 2 wird in einem Zähler 4, wie in Figur 2a dargestellt ist, eingebaut. In dem Zähler 4 ist in der Regel eine Scheibe 10 aus einem bruchfesten Glas oder Plexiglas angeordnet. Durch die Scheibe 10 kann eine Blende 10a betrachtet werden. Die Blende 10a verdeckt das Zählwerk 2 bis auf ein Sichtfenster 10b bzw. den Ablesebereich. Das Sichtfenster 10b bzw. der Ablesebereich hat eine Breite 10b' in etwa entsprechend der Breite des Zählwerks 2. Die Höhe 10b" ist in der Regel in etwa entsprechend der Länge der Sekante 6a".Durch das Rotieren der Zählscheiben 6a-e werden bei einer vollständigen Umdrehung einer der Zählscheiben 6a-e in dem Sichtfenster 10b jeweils einmal die Ziffern 0-9 dieser Zählscheibe 6a-e dargestellt.

Zur Darstellung von Nachkommastellen des Zählwertes ist eine oder mehr Zählscheiben 6a-e in einem insbesondere rot markierten Nachkommabereich 12 angeordnet. In der Figur 2a ist dies die Zählscheibe 6a, wohingegen die weiteren Zählscheiben 6b-e außerhalb des Nachkommabereichs 12 angeordnet sind. Bei einem Stromzähler wird in der Regel der Energieverbrauch in Kilowattstunden gemessen. Die erste Nachkommastelle löst den Verbrauch in Zehntel Kilowattstunden auf. Eine mögliche zweite oder dritte Nachkommastelle löst den Verbrauch entsprechend in 1/100 bzw. 1/1000 kWh auf. Bei einem Wasserzähler wird in der Regel die Durchflussmenge in Kubikmetern gemessen. Hierbei können ein, zwei oder drei Nachkommastellen den Verbrauch in Zehntel, Hundertstel oder Tausendstel Kubikmeter auflösen. Selbiges gilt natürlich auch für einen Gaszähler.

Zur besseren Markierung des Nachkommabereichs 12 ist es auch möglich, das die Ziffern auf der Zählscheibe 6a in einer anderen Farbe dargestellt sind als die Ziffern auf den anderen Zählscheiben, z.B. rot gegenüber weiß. Auch kann ein Bereich um die Ziffern der Nachkommastellen herum, im Bereich des Sichtfensters 10b ebenfalls andersfarbig, insbesondere rot abgesetzt sein.

Figur 2b zeigt eine schematische Ansicht eines weiteren möglichen Energiemengenzählers 4. Die Darstellung zeigt einen häufig verwendeten Gas- oder Wasserzähler 4. Auch hier ist ein Sichtfenster 10b an einem Zählwerk 2 angeordnet.

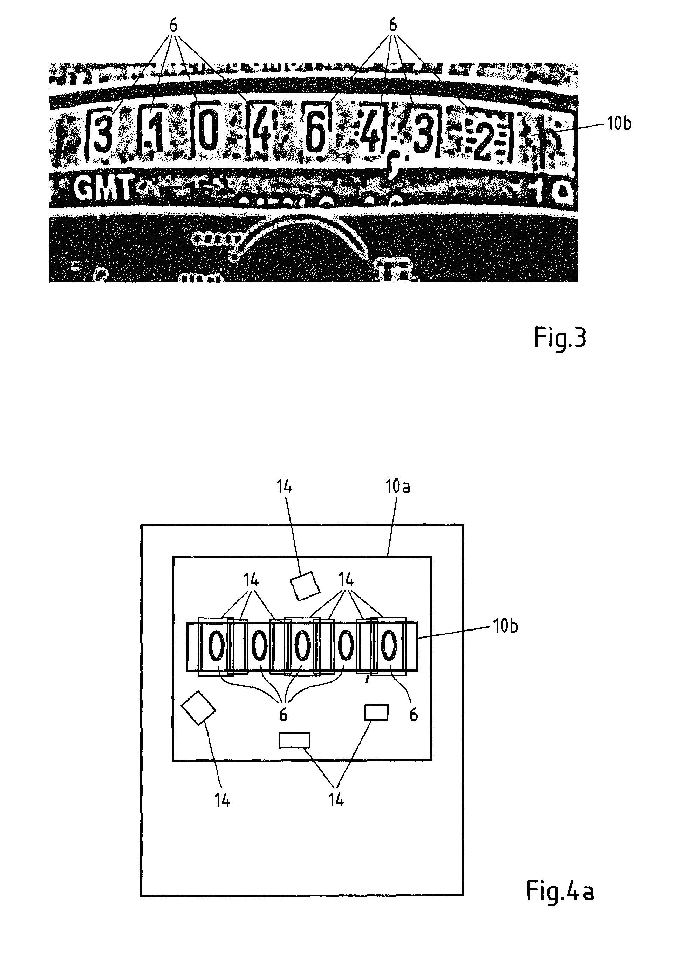

Zur Erfassung eines Zählwerts des mechanischen Zählwerks wird nun vorgeschlagen, dass im Bereich der Blende 10a bzw. des Sichtfensters 10b ein Bild mittels eines optischen Sensors, beispielsweise einer Digitalkamera erfasst wird. Die Kamera (nicht dargestellt) kann vor der Scheibe 10 angeordnet sein und in vorzugsweise zyklischen Abständen, beispielsweise im Sekundentakt, Bilder von dem Zählwerk 2 im Bereich der Blende 10a erfassen. Ein solches von einer Kamera erfasstes Bild eines Stromzählers ist in der Fig. 3 dargestellt. Das in der Fig. 3 dargestellte Bild ist in Grauwerte aufgelöst. Zu erkennen ist in der Fig. 3, dass in dem Sichtfenster 10b eine Mehrzahl von Zählscheiben 6 angeordnet sind. Ferner ist zu erkennen, dass neben den Zählscheiben 6 in dem Bild weitere Objekte bzw. Ziffern erfasst werden könnten. Für die Erfassung des Zählerstandes ist es aber notwendig, nur die Ziffern im Sichtfenster 10b bzw. in den jeweiligen Ablesebereichen zu erfassen und zu bestimmen. Hierzu muss in dem in Fig. 3 gezeigten Bild zunächst bestimmt werden, welche Bildbereiche eine gültige Ziffer des Zählerstandes darstellen. Diese Kalibrierung muss zumindest bei der Initialisierung des optischen Sensors durchgeführt werden, kann jedoch auch in Abständen erneuert werden.

Fig. 4a zeigt schematisch ein Bild entsprechend Fig. 3. In dem Bild gemäß der Fig. 4a sind im Bereich Blende 10a eine Mehrzahl von Zählscheiben 6 erkennbar. Das in der Fig. 4a dargestellte Bild wurde zunächst einer Objekterkennung unterzogen. Bei dieser Objekterkennung wurde eine Mehrzahl an Bildobjekten 14 (Nachfolgend auch kurz Objekte genannt) detektiert. Zur Objekterkennung wurde das Bild z.B. zunächst einer Laplace Transformation unterzogen und anschließend wurde im resultierenden Ortsfrequenzbereich eine Kantenerkennung durchgeführt. Anhand der erkannten Kanten wurden die Objekte 14 bestimmt. Zu erkennen ist, dass die erkannten Objekte 14 unterschiedliche Größe als auch unterschiedliche Ausrichtung haben können.

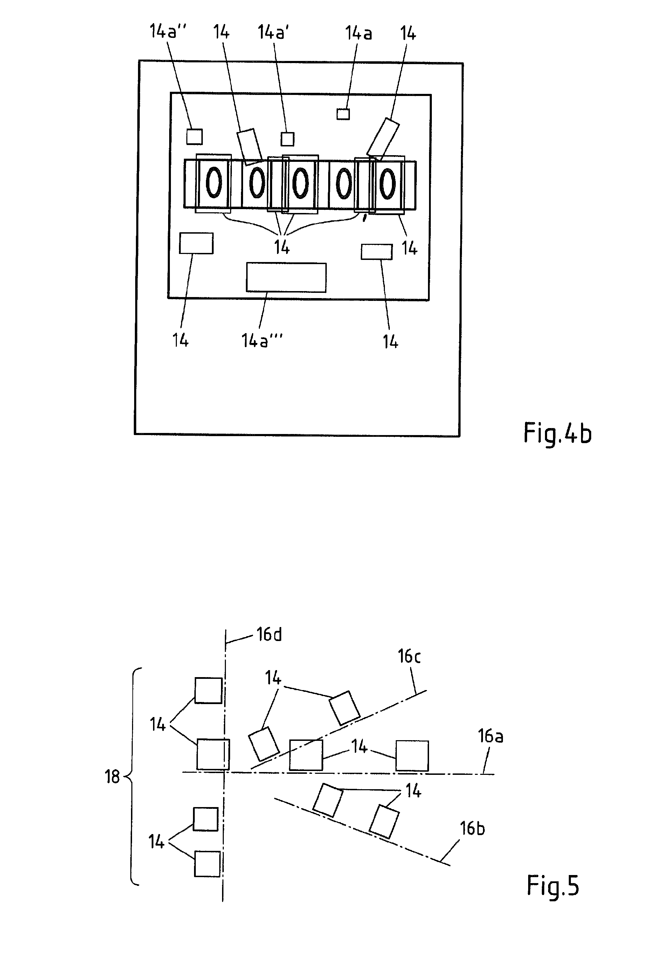

Ein anderes Beispiel von erkannten Objekten 14 in dem Bild ist in der Fig. 4b dargestellt. Auch hier ist zu erkennen, dass eine Mehrzahl an Objekten 14 erkannt wurde, wobei deren Position, Größe und Ausrichtung höchst verschieden sein kann.

Um nun aus den erkannten Objekten 14 diejenigen herausfiltern zu können, innerhalb derer tatsächlich Ziffern einer Zählscheibe 6 abgelesen werden können, insbesondere die Auswertungsobjekte, kann es notwendig sein, zunächst die Objekte nach ihrer Größe zu filtern. Hierbei können beispielweise die Objekte 14 aus der Betrachtung entfernt werden, die entweder zu groß oder zu klein sind. So sind beispielsweise die Objekte 14a, 14a', 14a" zu klein und das Objekt 14a"' gemäß der Fig. 4b zu groß. Diese Objekte 14a können bei der nachfolgenden Auswertung außer Betracht bleiben. Es ist davon auszugehen, dass Auswertungsobjekte in etwa die Größer eines Ablesebereichs einer Zählscheibe 6 haben. Insbesondere muss die Größe zumindest die Größer einer Ziffer einer Zählscheibe sein.

Zur Bewertung der Größer eines Objektes kann es beispielsweise sinnvoll sein, die den Objekten 14a-a"' hinsichtlich ihrer vereinnahmten Fläche zu betrachten. Die Fläche eines der Objekte 14 kann beispielsweise durch die Anzahl der Bildpunkte innerhalb der die Objekte eingrenzenden Kanten bestimmt werden. Auch ist es möglich, die Kantenlänge der erkannten Objekte miteinander zu multiplizieren.

Bei der Objekterkennung kann auch zunächst nur nach solchen Objekten gesucht werden, die in etwa rechteckig sind. Alle anderen Formen von Objekten können ggf. auch herausgefiltert werden.

Die erkannten bzw. zu prüfenden Objekte können jeweils rechteckig sein, was durch einen geeigneten Objekterkennungsalgorithmus sichergestellt werden kann. Es hat sich gezeigt, dass lediglich rechteckige Objekte geeignet sind, um einen Ablesebereich eines Sichtfensters darzustellen.

Auch können die Objekte nach ihrer Höhe und Breite herausgefiltert werden. So kann z.B. eine Mindesthöhe, also eine minimale Kantenlänge einer langen Kante eines Objektes bestimmt werden. Diese Mindesthöhe kann z.B. die Höhe einer Ziffer auf einer Zählscheibe sein. Ebenfalls kann eine Mindestbreite, also eine minimale Kantenlänge einer kurzen Kante eines Objektes bestimmt werden. Eine Mindestbreite kann z.B. die Breite einer Zählscheibe sein. Ebenfalls können maximale Werte für Höhe und Breite bestimmt sein, z.B. das 1,5 fache oder das 2-fache der jeweiligen Mindestmaße.

Nachdem die Objekte zunächst anhand ihrer Größe gefiltert wurden, kann anschließend, wie in der Fig. 5 schematisch dargestellt, bestimmt werden, ob Objekte entlang einer gemeinsamen Geraden angeordnet sind. In der Fig. 5 sind die Geraden 16a, 16b, 16c und 16d dargestellt. Entlang jeder dieser Geraden 16a-d sind jeweils zumindest zwei Objekte 14 angeordnet. Zur Bestimmung der Geraden 16a-d wird überprüft, ob Seitenkanten oder Ecken der Objekte 14 entlang einer Linie verlaufen. Hierzu kann in dem Bild in einem Raster verschiedene Linien durchlaufen werden. Ergibt sich eine Linie, entlang derer zumindest zwei Objekte 14 verlaufen, kann eine solche Linie als eine der Geraden 16a-d angenommen werden. Alle Objekte 14, die entlang einer Geraden 16a-d verlaufen, können zu einer Gruppe 18 gruppiert werden. Für jeweils eine Gerade 16a-d kann genau eine Gruppe 18 an Objekten 14 bestimmt werden.

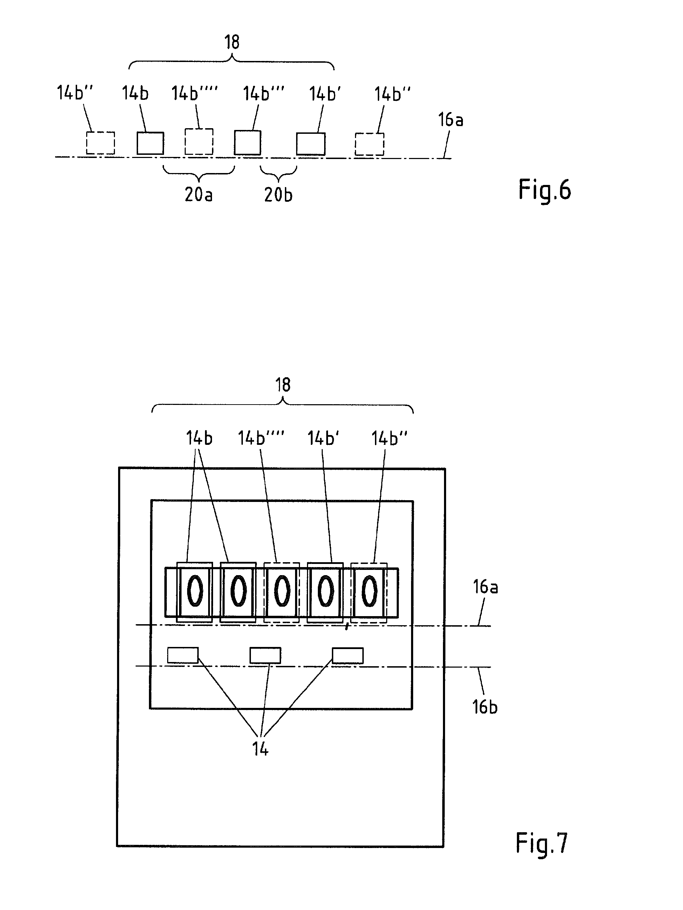

Anschließend kann überprüft werden, ob sich, wie in Fig. 6 schematisch dargestellt, in einer seitlichen Erstreckung einer Geraden 16a weitere Objekte befinden. In der Fig. 6 sind beispielsweise die Objekte 14b und 14b' die an den äußeren Enden einer Gruppe 18 angeordneten Objekte. Die Objekte 14b der Gruppe 18 verlaufen entlang der Geraden 16. Nachdem die Gruppe 18 bestimmt wurde, kann die Gerade 16a jenseits der Objekte 14b und 14b' extrapoliert werden und es kann überprüft werden, ob im Bereich der extrapolierten Geraden 16a weitere Objekte 14b" vorhanden sind. Diese weiteren Objekte 14b" müssen nicht zwingend auf der Geraden 16a liegen, sondern es kann ausreichend sein, wenn die Gerade 16a die Fläche der Objekte 14b" schneidet. Solche im Bereich der extrapolierten Geraden 16a aufgefundenen Objekte 14b" können der Gruppe 18 hinzugefügt werden.

Zusätzlich oder alternativ hierzu ist es möglich, Abstände zwischen den Objekten 14b, 14b' und 14b"' innerhalb einer Gruppe 18 auszuwerten. Hierbei ist es beispielsweise möglich, jeweils einen Abstand 20a, 20b zwischen jeweils zwei Objekten 14b, 14b"' sowie 14b"' und 14b' auszuwerten. Bei dieser Auswertung kann beispielsweise der kleinste Abstand 20b zwischen zwei Objekten 14b' und 14b"' bestimmt werden. Ausgehend von diesem kleinsten Abstand 20b ist es möglich, entlang der Geraden 16a die Objekte äquidistant auszurichten, indem beispielsweise in einer Lücke die im Abstand 20a entdeckt wurde, ein weiteres Objekt 14b""interpoliert wird. Durch die Interpolation von zusätzlichen Objekten 14b"" in Lücken zwischen zwei Objekten 14b, 14b"' ist es möglich, entlang der Geraden 16a die Objekte 14 möglichst äquidistant zueinander anzuordnen. Es ist erkannt worden, dass an einem mechanischen Zählwerk 2 die Zählscheiben 6a-e vorzugsweise äquidistant zueinander angeordnet sind. Diese Erkenntnis hat dazu geführt, dass die erkannten Objekte 14 ebenfalls möglichst äquidistant zueinander sein müssen. Insbesondere ist davon auszugehen, dass gültige Auswertungsobjekte äquidistant zueinander sind. Ist zwischen zwei Objekten 14 ein zu großer Abstand, kann davon ausgegangen werden, dass wenn diese Objekte 14 tatsächlich Auswertungsobjekte darstellen, in dieser Lücke ein weiteres Objekt 14b"" vorhanden ist, was als Auswertungsobjekt dienen kann. In einem solchen Fall kann in einer solchen Lücke ein zusätzliches, nicht zuvor erkanntes Objekt 14b"" eingefügt werden. Auch ein so eingefügtes Objekt 14b"" kann der Gruppe 18 hinzugefügt werden.

In allen Objekte 14 einer jeweiligen Gruppe 18 wird eine Bilderkennung durchgeführt. Hierbei wird überprüft, ob innerhalb des Objekts 14 eine gültige Ziffer erkannt werden kann.

In der Fig. 7 ist eine solche Erkennung dargestellt. Zu erkennen ist, dass zwei Geraden 16a, 16b bestimmt wurden, entlang derer Objekte 14, 14b', 14b", 14b""angeordnet sind. Entlang der Geraden 16a ist das Objekt 14b"" interpoliert worden und das Objekt 14b" aufgrund einer Extrapolation der Geraden 16a der Gruppe hinzugefügt worden.

Wie in der Fig. 7 zu erkennen ist, wird ausschließlich in den Objekten 14b, 14b', 14b" und 14b"" entlang der Geraden 16a eine Ziffernerkennung möglich sein und in den Objekten 14 entlang der Geraden 16b wird wohl keine gültige Ziffer erkannt werden.

Unabhängig von dem Beispiel gemäß der Fig. 7 werden in allen Objekten 14 entlang jeder Geraden 16a, 16b Ziffernerkennungen durchgeführt. Anschließend wird überprüft, in wie vielen Objekten 14 einer Gruppe 18 eine gültige Ziffer aufgefunden wurde.

Anschließend wird diejenige Gruppe 18 ausgewählt, in der in den meisten Objekten 14 gültige Ziffer aufgefunden wurden. Vorliegend ist dies die Gruppe 18 entlang der Geraden 16a. Entlang der Geraden 16b wurde in keinem Objekt eine Ziffer erkannt.

Nachdem die Gruppe 18 ermittelt wurde, innerhalb derer die meisten Objekte 14 gültig erkannte Ziffern aufweisen, werden diese Objekte 14 der Gruppe 18 als Auswertungsobjekte bestimmt. Jedes der Auswertungsobjekte ist genau einer Zählscheibe 6a-e zugeordnet.

Durch anschließende Auswertung der in den Auswertungsobjekten ermittelten Ziffern ist es möglich, den Zählerstand optisch zu erfassen.

Die Erfassungsgenauigkeit ist durch die beschriebene Kalibrierung sehr hoch, da mit sehr hoher Wahrscheinlichkeit genau diejenigen Bildobjekte bestimmt worden sind, die als Auswertungsobjekte genau einer Zählscheibe 6a-e zugeordnet sind. Innerhalb dieser Auswertungsobjekte sind die jeweiligen Ziffern der Zählscheiben 6a-e dargestellt. Mit Hilfe der erfassten Ziffern kann der Zählerstand zu jedem Zeitpunkt der Erfassung eines Bildes bestimmt werden.

## Patentansprüche

1. Verfahren zur Kalibrierung eines an einem mechanischen Zählwerk angeordneten optischen Sensors umfassend:
- optisches Erfassen eines Bildes zumindest eines Sichtbereichs des eine Mehrzahl von Zählscheiben umfassenden Zählwerks,
- Bestimmen von Bildobjekten innerhalb des erfassten Bildes,
- Ermitteln einer Auswahl von Auswertungsobjekten aus den Bildobjekten derart, dass die ermittelten Auswertungsobjekte jeweils genau einer Zählscheibe zugeordnet sind.

2. Verfahren nach Anspruch 1,
**dadurch gekennzeichnet,**
- **dass** die ermittelten Auswertungsobjekte jeweils einem Ablesebereich einer Zählscheibe zugeordnet sind.

3. Verfahren nach Anspruch 1 oder 2,
**dadurch gekennzeichnet,**
- **dass** Farbwerte von Bildpunkten des erfassten Bildes in Grauwerte oder Schwarz-Weiß Werte überführt werden.

4. Verfahren nach einem der vorangehenden Ansprüche,
**dadurch gekennzeichnet,**
- **dass** das erfasste Bild transformiert wird, insbesondere das erfasste Bild mit Hilfe einer Laplace-Transformation transformiert wird, und/oder
- **dass** in dem transformierten Bild die Bildobjekte bestimmt werden, und/oder
- **dass** die Bildobjekte, insbesondere im transformierten Bild, mit Hilfe einer Kantenerkennung bestimmt werden.

5. Verfahren nach einem der vorangehenden Ansprüche,
**dadurch gekennzeichnet,**
- **dass** die Bildobjekte nach ihrer Größe gefiltert werden und dass aus den gefilterten Bildobjekten die Auswertungsobjekte ermittelt werden.

6. Verfahren nach einem der vorangehenden Ansprüche,
**dadurch gekennzeichnet,**
- **dass** Bildobjekte zueinander gruppiert werden, in dem Abstände, vorzugsweise im Bild horizontale oder vertikale verlaufende Abstände zwischen den Bildobjekten bestimmt werden und
- **dass** diejenigen Bildobjekte, die mit ähnlichen, vorzugsweise gleichen Abständen zueinander angeordnet sind, jeweils einer Gruppe zugeordnet werden.

7. Verfahren nach einem der vorangehenden Ansprüche,
**dadurch gekennzeichnet,**
- **dass** Bildobjekte zueinander gruppiert werden, in dem Geraden durch Kanten und/oder Ecken von Bildobjekten bestimmt werden und
- **dass** diejenigen Bildobjekte, die jeweils entlang einer Geraden angeordnet sind, jeweils einer Gruppe zugeordnet werden.

8. Verfahren nach einem der vorangehenden Ansprüche,
**dadurch gekennzeichnet,**
- **dass** die zuvor bestimmten Geraden durch Bildobjekte extrapoliert werden und dass entlang der extrapolierten Geraden weitere Bildobjekte gesucht werden und der Gruppe zugeordnet werden.

9. Verfahren nach einem der vorangehenden Ansprüche,
**dadurch gekennzeichnet,**
- **dass** entlang der zuvor bestimmten Geraden die Abstände zwischen den bestimmten Bildobjekten ausgewertet werden und dass abhängig von den ausgewerteten Abständen zwischen zumindest zwei Bildobjekten ein weiteres Bildobjekt bestimmt wird, insbesondere derart, dass Bildobjekte einer Gruppe äquidistant zueinander sind.

10. Verfahren nach einem der vorangehenden Ansprüche,
**dadurch gekennzeichnet,**
- **dass** die Bildobjekte gedreht werden, derart, dass Kanten der Bildobjekte im erfassten Bild vorzugsweise horizontal und/oder vertikal verlaufen.

11. Verfahren nach einem der vorangehenden Ansprüche,
**dadurch gekennzeichnet,**
- **dass** zumindest ein Bildobjekt in zumindest einer Gruppe derart ausgewertet wird, dass eine Ziffernerkennung durchgeführt wird.

12. Verfahren nach einem der vorangehenden Ansprüche,
**dadurch gekennzeichnet,**
- **dass** eine Anzahl von erkannten Ziffern in einer Gruppe ausgewertet wird, und dass abhängig von der Anzahl der erkannten Ziffern die Bildobjekte einer Gruppe als Auswahlobjekte bestimmt werden.

13. Verfahren nach einem der vorangehenden Ansprüche,
**dadurch gekennzeichnet,**
- **dass** diejenigen Gruppen verworfen werden, aus denen keine Auswahlobjekte bestimmt wurden.

14. Verfahren nach einem der vorangehenden Ansprüche,
**dadurch gekennzeichnet,**
- **dass** die Position und/oder Größe der bestimmten Auswahlobjekte für eine Erfassung von Zählwerten gespeichert werden.

15. Verfahren nach einem der vorangehenden Ansprüche,
**dadurch gekennzeichnet,**
- **dass** in den Auswahlobjekten Ziffern erfasst werden und die erfassten Ziffern zur Bestimmung eines Zählwerts verwendet werden.

16. Verfahren nach einem der vorangehenden Ansprüche,
**dadurch gekennzeichnet,**
**dass** die Kalibrierung in Abständen, vorzugsweise in Monatsabständen, Halbjahresabständen oder Jahresabständen erneut durchgeführt wird.

17. Vorrichtung eingerichtet zur Durchführung eines Verfahrens nach Anspruch 1, bei der
- ein optischer Sensor an einem mechanischen Zählwerk verliersicher derart angeordnet ist, das er ein Bildes zumindest eines Sichtbereichs des eine Mehrzahl von Zählscheiben umfassenden Zählwerks erfasst,
- der optische Sensor mit einem Prozessor verbunden ist, und
- der Prozessor dazu eingerichtet ist, Bildobjekte innerhalb des erfassten Bildes zu bestimmen und eine Auswahl von Auswertungsobjekten aus den Bildobjekten zu ermitteln, derart, dass die ermittelten Auswertungsobjekte jeweils genau einer Zählscheibe zugeordnet sind.
